# EUROPÄISCHE PATENTSCHRIFT

(11) **EP 0 518 057 B1**
(45) Veröffentlichungstag und Bekanntmachung des Hinweises auf die Patenterteilung: **29.07.1998**
(21) Anmeldenummer: 92107861.4
(22) Anmeldetag: 11.05.1992
(51) Int. Cl.: C08G 77/04, C08G 77/20, C08F 255/02, C08L 43/04, C08K 5/54

(54) **Gemische kettenförmiger und cyclischer Siloxan-Oligomerer, Verfahren zu deren Herstellung sowie ihre Verwendung**
Mixtures of linear and cyclic siloxane oligomers, their preparation and use
Mélanges d'oligomères linéaires et cycliques de siloxanes, leur préparation et leur utilisation

(30) Priorität: 08.06.1991 DE 4118921; 13.11.1991 DE 4137278
(43) Veröffentlichungstag der Anmeldung: 16.12.1992
(73) Patentinhaber: HÜLS AKTIENGESELLSCHAFT, 45764 Marl (DE)
(72) Erfinder: Horn, Michael, Dr., W-7888 Rheinfelden (DE); Kötzsch, Hans-Joachim, Dr., W-7888 Rheinfelden (DE)

(56) Entgegenhaltungen:
- EP-A- 0 212 630
- EP-A- 0 389 138
- EP-A- 0 394 798
- GB-A- 1 057 980
- US-A- 2 480 822
- WORLD PATENTS INDEX LATEST Section Ch, Week 9213, 27. Mai 1992 Derwent Publications Ltd., London, GB; Class A, AN 92-102366
- R. Nagel et al., Journal of Organic Chemistry, Band XVI (1951), Teil 2, 1768-1771

## Beschreibung

Gegenstand der Erfindung sind Gemische kettenförmiger und cyclischer Siloxane bzv. Siloxan-Oligomerer der allgemeinen Formeln I und II, 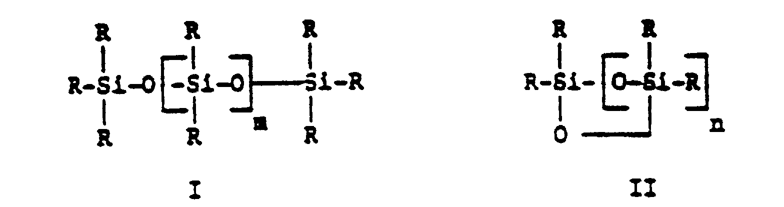 in denen m eine ganze Zahl von 0 bis 8, n eine ganze Zahl von 2 bis 8 bedeutet, die Substituenten R aus Vinyl-Gruppen, Methoxy- und/oder Ethoxy-Gruppen und gegebenenfalls Alkyl-, Isoalkyl- oder Cycloalkyl-Gruppen mit 1 bis 18 C-Atomen bestehen, wobei pro Silicium-Atom höchstens ein Vinyl-Substituent auftritt, das Molverhältnis von Vinyl- zu Alkoxy-Substituenten 1 : 1 bis 1 : 8 und das Molverhältnis von Vinyl- zu Alkyl-Substituenten 1 : 0 bis 1 : 8 beträgt.

Weiterer Gegenstand der Erfindung ist ein Verfahren zur Herstellung der genannten Gemische durch gezielte, sauer katalysierte Hydrolyse sowie die Verwendung dieser Gemische als Vernetzungsmittel für thermoplastische Polyolefine.

R. Nagel et al. (Journal of Organic Chemistry, Band XVI (1951), Teil 2, Seiten 1768 bis 1771) beschrieben, daß bei der Herstellung von Vinyltrimethoxysilan durch Umsetzung von wasserfreiem Methanol mit Vinyltrichlorsilan als Beiprodukt 1,3-Divinyltetramethoxydisiloxan an fällt Ferner wurden Vinyltriethoxysilan mit Wasser in einem molaren Verhältnis von 2:1 über 2 Stunden bei 85 bis 90°C reagieren lassen und das 1,3-Divinyltetraethoxysilan isoliert.

Die in diesem Dokument geänßerte Vermutung, dass aus dem gefundenen niedrigen Wert für M.R. (d.h. die Molrefraktion) von 1,3-Divinyltetramethoxydisiloxan sei auf die Gegenwart höherer Polymere zu Schließen, ist irrig. Höhere Polymere würden den M.S. -Wert erhöhen.

Es ist bekannt, für die Herstellung hochwertiger Kabelisoliermassen eingesetztes Hochdruckpolyethylen mit Vinyltrimethoxysilan zu vernetzen. Dieses Verfahren hat den besonderen Nachteil der hohen Flüchtigkeit des Vinyltrimethoxysilans, so daß bei der Verarbeitung hohe Verluste auftreten, die sich umweltbelastend auswirken und wegen der Toxizität des Vinyltrimethoxysilans auch ein Sicherheitsrisiko darstellen. Andererseits werden durch die Flüchtigkeit des Vinyltrimethoxysilans bei der Verarbeitung unwillkommene Qualitätsschwankungen im Vernetzungsprodukt hinsichtlich der dielektrischen Eigenschaften und der von der Vernetzungsdichte und -homogenität abhängigen mechanischen Werte verursacht. Es ist daher auch schon versucht worden, anstatt des Vinyltrimethoxysilans das Vinyl-tris-2-methoxyethoxysilan einzusetzen, wobei teilweise bessere Ergebnisse erzielt wurden. Von ganz besonderen Nachteil hierbei ist jedoch die extreme Giftigkeit des bei der Vernetzungsreaktion entstehenden 2-Methoxyethanols. Es wird daher angestrebt, dieses Vernetzungsverfahren wegen zu hoher langzeittoxikologischer Risiken aufzugeben. Darüber hinaus stellt die elektrotechnische Industrie an die vernetzten Kabelisoliermassen höhere Anforderungen hinsichtlich dielektrischer, thermischer und mechanischer Eigenschaften als bisher realisiert werden konnten.

Die Vernetzung von Niederdruckpolyethylen ist für eine Reihe von Anwendungszwecken, die insbesondere eine höhere thermische Anforderung stellen (z. B. Rohre für Warmwasser), zur Verbesserung der Formstabilität wichtig. Es gab dafür aber bisher noch keine praktikable Lösung.

Es bestand daher das Problem, vernetzende Stoffe aufzufinden, die die geschilderten Nachteile nicht zeigen und die physikalischen Eigenschaften der Werkstoffe in der erwünschten Weise verbessern.

Die Ergebnisse der experimentellen Untersuchungen zu dieser Problemstellung zeigten, daß die erfindungsgemäßen Gemische kettenförmiger und cyclischer Siloxane bzw. Siloxan-Oligomerer der allgemeinen Formeln I und II das Problem in einfacher und fortschrittlicher Weise lösen: sie verbessern die physikalischen Werkstoffeigenschaften überraschend selbst bei wesentlich geringeren Einsatzkonzentrationen als bisher erforderlich, erlauben sauberes und verlustfreies Arbeiten und mindern die toxikologischen Risiken erheblich. Als Siloxane werden hierbei die Verbindungen der allgemeinen Formel I für m = 0 bezeichnet. Die erfindungsgemäßen Gemische sind bisher nicht bekannt.

Die Herstellung der erfindungsgemäßen Gemische erfolgt aus Vinyltrialkoxysilanen, gegebenenfalls im Gemisch mit Alkyltrialkoxysilanen und/oder Tetraalkoxysilanen durch Hydrolyse bzw. Cohydrolyse in Lösung des den Alkoxy-Gruppen entsprechenden Alkohols mit einer auf den erforderlichen Oligomerisierungsgrad berechneten Menge Wasser unter saurer Katalyse mit Chlorwasserstoff als Katalysator und anschlie-ßender Abtrennung des freien Alkohols und des Katalysators, z. B. mit üblichen destillativen Methoden, sowie gegebenenfalls destillative Aufarbeitung der Produkte.

Als Vinyltrialkoxysilane werden Vinyltrimethoxysilan oder Vinyltriethoxysilan eingesetzt. Erfindungsgemäß eingesetzte Alkyltrialkoxysilane sind beispielsweise
Ethyltriethoxysilan,
Propyltrimethoxysilan,
Isobutyltrimethoxysilan,
Cyclohexyltriethoxysilan,
Cyclopentyltrimethoxysilan,
Octyltrimethoxysilan,
Dodecyltrimethoxysilan,
Tetradecyltrimethoxysilan,
Octadecyltrimethoxysilan.

Als Tetraalkoxysilane werden Tetramethoxy- oder Tetraethoxysilan eingesetzt.

Die Silane werden im gewünschten Verhältnis, vorzugsweise bei Raumtemperatur, vorgemischt, mit der 0,2- bis 8 fachen Gewichtsmenge Alkohol (die die auf den gewünschten Oligomerisierungsgrad berechnete Wassermenge sowie Chlorwasserstoff als sauren Katalysator enthält) verdünnt und bei 20 bis 80 °C auskondensiert. Vorzugsweise beträgt die HCl-Konzentration im Wasser/Alkohol-Gemisch 3 bis 3 000 ppm. Nach Beendigung der Kondensation werden die freien Alkohole und der Chlorwasserstoff destillativ abgezogen. Im Reaktor verbleiben die neutralen Gemische der kettenförmigen und cyclischen Siloxane bzw. Siloxan-Oligomeren der allgemeinen Formeln I und II, die in der Regel nicht weiter gereinigt werden müssen, sondern sofort als Vernetzungsmittel einsetzbar sind.

Zur Verwendung als Vernetzungsmittel für Kabelmassen werden die entsprechend dem vorstehenden Absatz hergestellten erfindungsgemäßen Gemische in an sich bekannter Weise mit Hilfe von Peroxiden auf thermoplastische Polyolefine aufgepfropft und die resultierenden Pfropfpolymerisate hydrolytisch vernetzt. Die Werkstoffeigenschaften der so erhaltenen Produkte sind den nach herkömmlichen Methoden erzielten Ergebnissen überlegen.

Die Erfindung wird nachfolgend anhand der Beispiele näher erläutert.

### Beispiel 1

### Herstellung eines Cokondensats aus Vinyltrimethoxysilan und Methyltrimethoxysilan mit einem Molverhältnis Vinyl- : Methoxy-Gruppen von ca. 1 : 3 und dessen Verwendung zur Polyethylen-Vernetzung

a) Herstellung des Cokondensats:
In einem Rührreaktor mit Destillationseinrichtung und Vakuumanschluß wurden bei bis zu 20 °C 74 kg Vinyltrimethoxysilan und 44,2 kg Methyltrimethoxysilan vermischt. Das Gemisch wurde mit einer 2 400 ppm Chlorwasserstoff enthaltenden Lösung von 9,28 kg destilliertem Wasser in 61,9 kg Methanol versetzt. Die Temperatur stieg innerhalb von 31 Minuten auf 38 °C. Nach insgesamt 16 Stunden wurde das gesamte Methanol (ca. 85 kg) samt HCl-Gehalt bei ca. 300 mbar innerhalb ca. 3 Stunden vollständig abdestilliert. Danach wurde das Oligomerengemisch bis zu einem Druck von ca. 1 mbar in dem Siedeintervall zwischen 48 °C und 92 °C nahezu rückstandsfrei destilliert (Ausbeute ca. 93 kg). Der Siedepunkt des Produkts unter Normaldruck lag bei ca. 214 °C.
b) Anwendung zur Vernetzung von Polyethylen:
100 Gewichtsteile (T) Hochdruckpolyethylen wurden zusammen mit 2 T Oligomer-Produkt (aus Beispiel 1a) und 0,2 T Dicumylperoxid bei 182 °C plastifiziert und nach Einarbeitung von 0,05 T Dibutylzinndilaurat zu Normprütkörpern extrudiert, die 24 Stunden lang durch Vasserbehandlung bei 95 °C vernetzt wurden.
Vernetzungsgrad: Gelfraktion ≈ 100 % (keine löslichen Bestandteile mehr extrahierbar).

| Dielektrische Eigenschaften | Prüfung | |
|---|---|---|
| | trocken bei Raumtemperatur | nach 14 h/90 ^{o}C Wasserlagerung |
| Spez. Widerstand (Ω cm) | 37,6 x 10¹⁴ | 31,7 x 10¹⁴ |
| Dielektr. Verlustfaktor (tan δ) | 6,5 x 10⁻³ | 7,1 x 10⁻³ |
| Dielektrizitätszahl | 3,06 | 3,1 |

Aus den Werten geht hervor, daß das mit dem erfindungsgemäßen Gemisch vernetzte Polyethylen auch nach Wasserlagerung bei erhöhter Temperatur sehr gute Werte aufweist.

### Beispiel 2 (Vergleichsbeispiel)

100 Gewichtsteile (T) Hochdruckpolyethylen wurden zusammen mit 5 T Vinyltrimethoxysilan, 0,2 T Dicumylperoxid und 0,05 T Dibutylzinndilaurat bei 180 °C plastifiziert und zu Normprüfkörpern extrudiert, die in 24 Stunden bei 95 °C durch Wasserbehandlung vernetzt wurden.

Vernetzungsgrad: Gelfraktion ca. 72 % (ca. 28 % lösliche Bestandteile extrahierbar).

| Dielektrische Eigenschaften | Prüfung | |
|---|---|---|
| | trocken bei Raumtemperatur | nach 14 h/90 ^{o}C Wasserlagerung |
| Spez. Widerstand (Ω cm) | 8,4 x 10¹⁴ | 3,48 x 10¹⁴ |
| Dielektr. Verlustfaktor (tan δ) | 28,7 x 10⁻³ | 78,7 x 10⁻³ |
| Dielektrizitätszahl | 3,4 | 4,9 |

Der Vernetzungsgrad des Polyethylens in diesem Vergleichsbeispiel ist unvollständig. Die dielektrischen Eigenschaften nach Wasserlagerung sind erheblich schlechter als die entsprechenden Werte trocken bei Raumtemperatur.

### Beispiel 3 (Vergleichsbeispiel)

100 Gewichtsteile (T) Hochdruckpolyethylen wurden zusammen mit 2 T Vinyl-tris- Vinyl-tris-(2-Methoxyethoxy)-silan, 0,2 T Dicumylperoxid und 0,05 T Dibutylzinndilaurat bei 183 °C plastifiziert und zu Normprüfkörpern extrudiert, die 24 Stunden bei 95 °C durch Wasserbehandlung vernetzt wurden.

Vernetzungsgrad: Gelfraktion ca. 82 bis 83 % (ca. 17 % lösliche Bestandteile extrahierbar).

| Dielektrische Eigenschaften | Prüfung | |
|---|---|---|
| | trocken bei Raumtemperatur | nach 14 h/90 ^{o}C Wasserlagerung |
| Spez. Widerstand (Ω cm) | 12,1 x 10¹⁴ | 8,01 x 10¹⁴ |
| Dielektr. Verlustfaktor (tan δ) | 8,9 x 10⁻³ | 12.4 x 10⁻³ |
| Dielektrizitätszahl | 3,23 | 3,55 |

Auch hier sind nach Wasserlagerung die dielektrischen Eigenschaften merklich ungünstiger als vorher.

### Beispiel 4

### Herstellung eines Cokondensats aus Vinyltriethoxysilan, Octyltriethoxysilan und Tetraethoxysilan mit einem Molverhältnis von Vinyl- : Ethoxy-Gruppen von ca. 1 : 3,7 und dessen Verwendung zur Polyethylen-Vernetzung

a) Herstellung des Cokondensats:
   In einem Rührreaktor mit Destillationseinrichtung und Vakuumanschluß wurden bei 20 °C 57 kg Vinyltriethoxysilan, 12,5 kg Tetraethoxysilan und 41,4 kg Octyltrietboxysilan vermischt und das Gemisch mit einer 1 700 ppm Chlorwasserstoff enthaltenden Lösung von 11,61 kg destilliertem Wasser in 51,4 kg Ethanol versetzt. Die Temperatur stieg innerhalb von 53 Minuten auf 34 °C. Nach insgesamt 18 Stunden wurde das gesamte Ethanol (ca. 81 kg) samt HCl-Gehalt bei ca. 200 mbar und gegen Ende bei ca. 160 °C Blasentemperatur und vollem Vakuum (ca. 1 mbar) innerhalb 2 bis 3 Stunden vollständig abgezogen. Es vurden ca. 92 kg nichtflüchtiges Oligomerengemisch erhalten.
b) Anwendung zur Vernetzung von Polyethylen:
   100 Gewichtsteile (T) Niederdruckpolyethylen hoher Dichte wurden zusammen mit 3 T Oligomer-Produkt (aus Beispiel 4 a) und 0,2 T Ditertiärbutylperoxid bei 239 °C plastifiziert. Die homogene Polymerschmelze wurde nach Einarbeitung von 0,05 T Dibutylzinndilaurat zu Prüfkörpern extrudiert, die 24 Stunden durch Wasserbehandlung bei 95 °C vernetzt wurden.
   Vernetzungsgrad: Gelfraktion ≈ 100 % (keine löslichen Bestandteile extrahierbar).
   Das mit dem erfindungsgemäßen Gemisch vernetzte Polyethylen Kies einen praktisch vollständigen Vernetsungsgrad auf. Die dielektrischen Werte wurden nicht gemessen.

### Beispiel 5 (Vergleichsbeispiel)

100 Gewichtsteile (T) Niederdruckpolyethylen hoher Dichte wurden mit 5 T Vinyltrimethoxysilan, 0,2 T Dicumylperoxid und 0,05 T Dibutylzinndilaurat bei 236 °C plastifiziert, wobei Stippenbildung eintrat. Die extrudierten Prüfkörper waren inhomogen und enthielten Stippen und "Fischaugen".

Vernetzungsgrad: Gelfraktion ca. 16 %.

Der Vernetzungsgrad des Polyethylens war unvollständig. Die dielektrischen Werte wurden nicht bestimmt.

### Beispiel 6

### Herstellung eines Kondensats aus Vinyltrimethoxysilan mit einem Molverhältnis von Vinyl- : Methoxy-Gruppen von ca. 1 : 1,75 und dessen Verwendung zur Polyethylen-Vernetzung

a) Herstellung des Kondensats:
In einem Rührreaktor mit Destillationseinrichtung und Vakuumanschluß wurden bei 20 °C 44,4 kg Vinyltrimethoxysilan mit einer 1 100 ppm Chlorwasserstoff enthaltenden Lösung von 3,38 kg Wasser in 22,5 kg Methanol versetzt. Die Temperatur stieg innerhalb von 26 Minuten auf 36 °C. Nach insgesamt 13 Stunden wurde das gesamte Methanol (ca. 34,5 kg) samt HCl-Gehalt bei ca. 300 mbar vollständig abdestilliert innerhalb ca. 2 bis 3 Stunden. Danach wurde das Oligomerengemisch bei ca. 1 mbar in dem Siedeintervall zwischen 45 °C und 90 °C nahezu rückstandsfrei destilliert (Ausbeute ca. 32 kg). Der Produktsiedepunkt unter Normaldruck lag bei ca. 202 °C.
b) Anwendung zur Vernetzung von Polyethylen:
100 Gewichtsteile (T) Hochdruckpolyethylen wurden zusammen mit 1,4 T Oligomer-Produkt (aus Beispiel 6 a) und 0,14 T Dicumylperoxid bei 195 °C plastifiziert, wobei die Viskosität des Ansatzes merklich anstieg, und nach Einarbeitung von 0,05 T Dibutylzinndilaurat zu Prüfkörpern extrudiert, die 24 Stunden durch Wasserbehandlung bei 95 °C vernetzt wurden.
Vernetzungsgrad: Gelfraktion ca. 97 % (2 bis 3 % lösliche Bestandteile).

| Dielektrische Eigenschaften | Prüfung | |
|---|---|---|
| | trocken bei Raumtemperatur | nach 14 h/90 ^{o}C Wasserlagerung |
| Spez. Widerstand (Ω cm) | 19,8 x 10¹⁴ | 8,59 x 10¹⁴ |
| Dielektr. Verlustfaktor (tan δ) | 8,5 x 10⁻³ | 11,2 x 10⁻³ |
| Dielektrizitätszahl | 3,11 | 3,24 |

Im Gegensatz zu Beispiel 10 (Vergleichsbeispiel) wurde ein Oligomerengemisch erhalten, welches bei der Vernetzung von Hochdruckpolyethylen einsetzbar ist.

### Beispiel 7

### Vernetzung von Niederdruckpolyethylen mit Vinylmetboxysiloxan-Oligmeren (Vinyl- : Methoxy-Molgruppenverhältnis 1 : 1,75)

100 Gewichtsteile (T) Niederdruckpolyethylen hoher Dichte wurden mit 1 T Oligomer-Produkt (aus Beispiel 6 a) und 0,1 T Ditertiärbutylperoxid bei 252 °C plastifiziert und nach Einarbeitung von 0,05 T Dibutylzinndilaurat zu Prüfkörpern extrudiert, die 24 Stunden durch Wasserbehandlung bei 95 °C vernetzt wurden.

Vernetzungsgrad: Gelfraktion ca. 100 % (kaum lösliche Bestandteile extrahierbar).

Bemerkungen: siehe Beispiel 4 b).

### Beispiel 8

### Cokondensat aus Vinyltriethoxysilan und Tetraethoxysilan mit einem Molverhältnis von Vinyl- : Ethoxy-Gruppen von ca. 1 : 2,8

Analog Beispiel 6 a) wurde ein Gemisch aus 58 kg Vinyltrietboxysilan und 16,4 kg Tetraethoxysilan mit einer 2 600 ppm Chlorwasserstoff enthaltenden Lösung von 3,24 kg Wasser in 38,2 kg Ethanol zu ca. 40 kg Oligomeren umgesetzt.

Dieses Beispiel zeigt den erfindungsgemäßen Einsatz von Tetraethoxysilan.

### Beispiel 9

### Cokondensat aus Vinyltrimethoxysilan, Isobutyltrimethoxysilan und Tetramethoxysilan mit einem Molverhältnis von Vinyl- : Methoxy-Gruppen von ca. 1 : 2,3

Analog Beispiel 1wurde ein Gemisch von 29,6 kg Vinyltrimetboxysilan, 20,2 kg Isobutyltrimethoxysilan und 9,1 kg Tetramethoxysilan mit einer Lösung von 6,66 kg Wasser in 71 kg Methanol zu ca. 40,8 kg Oligomer umgesetzt.

Dieses Beispiel zeigt den erfindungsgemäßen Einsatz eines Isoalkyltrialkoxysilans.

### Beispiel 10 (Vergleichsbeispiel)

Analog Beispiel 6 wurden 44,4 g Vinyltrimethoxysilan bei 20 °C mit einer 1 100 ppm Chlorwasserstoff enthaltenden Lösung von 3,38 g Wasser in 22,5 g Methanol versetzt und 36 Stunden lang bei 40 °C gerührt. Die Destillation ergab ca. 30 g Methanol, ca. 21 g Vinyltrimethoxysilan und ca. 12 g festen polymeren Rückstand.

Bei diesem Vergleichsbeispiel blieb der Katalysator (HCl) im Reaktionsgemisch. Das Kondensatgemisch disproportionierte zu Monomerem und Hochpolymerem.

## Patentansprüche

1. Gemische kettenförmiger und cyclischer Siloxane bzw. Siloxan-Oligomerer der allgemeinen Formeln I und II, 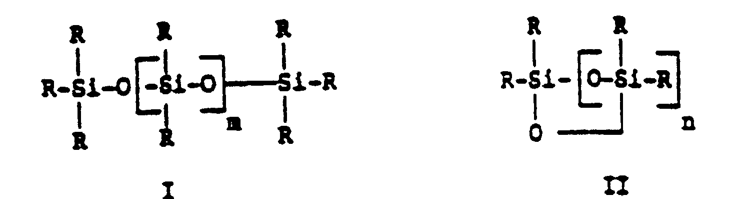 in denen m eine ganze Zahl von 0 bis 8, n eine ganze Zahl von 2 bis 8 bedeutet, die Substituenten R aus Vinyl-Gruppen, Methoxy- und/oder Ethoxy-Gruppen und gegebenenfalls Alkyl-, Isoalkyl- oder Cycloalkyl-Gruppen mit 1 bis 18 C-Atomen bestehen, wobei pro Silicium-Atom höchstens ein Vinyl-Substituent auftritt, das Molverhältnis von Vinyl- zu Alkoxy-Substituenten 1 : 1 bis 1 : 8 und das Molverhältnis von Vinyl- zu Alkyl-Isoalkyl- und Cycloalkyl-Substituenten 1 : 0 bis 1 : 8 beträgt.

2. Verfahren zur Herstellung der Gemische nach Anspruch 1 durch gezielte, sauer katalysierte Hydrolyse, dadurch gekennzeichnet, daß HCl als Katalysator, Vinyltrialkoxysilane, gegebenenfalls Alkyl-Isoalkyl- bzw Cycloalkyl-trialkoxysilane und/oder Tetraalkoxysilane, als Ausgangsprodukte eingesetzt werden und mit einer berechneten Menge Wasser in Lösung der 0,2- bis 8fachen Gewichtsmenge an Methanol oder Ethanol, bezogen auf die Silane, eine Kondensation bei 20 bis 80 °C unter Entfernung des Katalysators und des freien Alkohols durchgeführt wird.

3. Verfahren nach Anspruch 2, dadurch gekennzeichnet, daß die HCl-Konzentration im Wasser/Alkohol-Gemisch 3 bis 3 000 ppm beträgt.

4. Verwendung der Gemische nach Anspruch als Vernetzungsmittel für thermoplastische Polyolefine durch Pfropfpolymerisation und hydrolytische Auskondensation in an sich bekannter Weise.

## Claims

1. A mixture of chain and cyclic siloxanes or siloxane oligomers of the general formulae I and II, 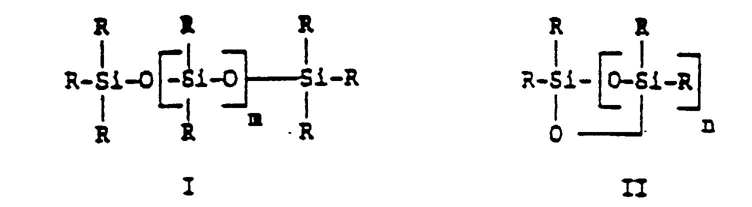 in which m denotes an integer from 0 to 8, n denotes an integer from 2 to 8 and the substituents R consist of vinyl groups, methoxy and/or ethoxy groups and, optionally, alkyl, isoalkyl or cycloalkyl groups having 1 to 18 C atoms, there being at most one vinyl substituent per silicon atom, the molar ratio of vinyl to alkoxy substituents being 1:1 to 1:8 and the molar ratio of vinyl to alkyl, isoalkyl and cycloalkyl substituents being 1:0 to 1:8.

2. A process for the preparation of the mixture according to claim 1 by targeted, acid-catalysed hydrolysis, characterised in that HCl is used as catalyst and vinyltrialkozysilanes and optionally alkyl-, isoalkyl- or cycloalkyltrialkozysilanes and/or tetraalkoxysilanes are used as starting materials and a condensation reaction is carried out at 20 to 80°C using a calculated amount of water in solution of 0.2 to 8 times the amount by weight of methanol or ethanol, based on the silanes, with removal of the catalyst and of the free alcohol.

3. A process according to claim 2, characterised in that the HCl concentration in the water/alcohol mixture is 3 to 3,000 ppm.

4. The use of the mixture according to claim 1 as crosslinking agent for thermoplastic polyolefins by graft polymerisation and a complete condensation reaction by hydrolysis in a manner known per se.

## Revendications

1. Mélanges de siloxanes en chaînes ou cycliques ou de siloxanes oligomères de formules générales I et II 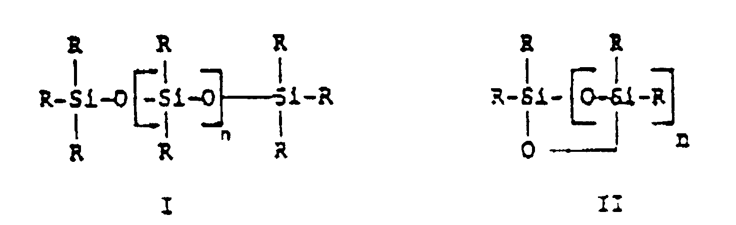 où m est un nombre entier de 0 à 8, n est un nombre entier de 2 à 8, les substituants R sont constitués de groupes vinyle, méthoxy et/ou éthoxy et le cas échéant des groupes alkyles, isoalkylee ou cycloalkyles avec 1 à 18 atomes de C, où existe par atome de silicium au plus un substituant vinyle, le rapport molaire des substituants vinyle aux substituants alcoxy représente 1 : 1 à 1 : 8 et le rapport molaire des substituants vinyle aux substituants alkyle, isoalkyle et cycloalkyle est de 1 : = 0 à 1 : 8.

2. Procédé de fabrication des mélanges selon la revendication 1 par hydrolyse appropriée catalysée par un acide,
caractérisé en ce qu'
on utilise HCl comme catalyseur, des vinyltrialcoxysilanes, le cas échéant des alkyl-, isoalkyl- ou cycloalkyl- trialcoxysilanes et/ou des tétraalcoxysilanes, comme produits de départ et qu'on réalise une condensation entre 20 et 80°C en éliminant le catalyseur et l'alcool libre, grâce à une quantité d'eau calculée par rapport aux silanes, en solution dans 0,2 à 8 fois la quantité pondérale de méthanol ou d'éthanol.

3. Procédé selon la revendication 2,
caractérisé en ce que
la concentration en HCl dans le mélange eau/alcool est de 3 à 3000 ppm.

4. Utilisation des mélanges selon la revendication 1 comme agent de réticulation de polyoléfines thermoplastiques par polymérisation par greffage et condensation par hydrolyse de la manière déjà connue.
